# EUROPÄISCHE PATENTSCHRIFT

(11) **EP 4 282 545 B1**
(45) Veröffentlichungstag und Bekanntmachung des Hinweises auf die Patenterteilung: **17.09.2025**
(21) Anmeldenummer: 23175190.0
(22) Anmeldetag: 24.05.2023
(51) Int. Cl.: B07C 3/04, B07C 3/02, B07C 5/36

(54) **SYSTEM UND VERFAHREN ZUM UMSCHLAGEN UND/ODER SORTIEREN VON STÜCKGÜTERN IN ABTRAGEBEREICHE**
SYSTEM AND METHOD FOR TURNING UP AND/OR SORTING PIECE GOODS INTO REMOVAL REGIONS
SYSTÈME ET PROCÉDÉ DE TRANSBORDEMENT ET/OU DE TRI DE MARCHANDISES DE DÉTAIL DANS DES ZONES DE DÉPÔT

(30) Priorität: 25.05.2022 DE 102022113319
(43) Veröffentlichungstag der Anmeldung: 29.11.2023
(73) Patentinhaber: Deutsche Post AG, 53113 Bonn (DE)
(72) Erfinder: PIONTEK, Christoph, 51597 Morsbach (DE); LINDENPÜTZ, Ralf, 57610 Altenkirchen (DE); WESTERHOLT, Dirk, 53229 Bonn (DE)
(74) Vertreter: Michalski Hüttermann & Partner Patentanwälte mbB

(56) Entgegenhaltungen:
- WO-A1-2018/231349
- US-A1- 2015 217 334
- US-B1- 6 292 710

## Beschreibung

### Technisches Gebiet

Die Erfindung betrifft ein System zum Umschlagen und/oder Sortieren von Stückgütern in Abtragebereiche.

Zudem betrifft die Erfindung ein Verfahren zum Umschlagen und/oder Sortieren von Stückgütern in Abtragebereiche.

### Hintergrund der Erfindung

Infolge steigenden Güterverkehrs durch Stückgutfahrten, LKW- oder Containertransporte, See- und/oder Luftfrachtpakettransporte im Rahmen von E-Commerce und Online-Versandhandelsangeboten hat sich die Anzahl an Transportgütern und insbesondere von Paketsendungen, nachfolgend allgemein als Stückgüter bezeichnet, signifikant erhöht.

Die Kurier-, Express- und Paketdienstleistungen stellen somit einen wichtigen Bestandteil im Transportgeschäft dar und zeichnen sich durch Schnelligkeit, Pünktlichkeit und Zuverlässigkeit aus. Die Anbieter sammeln ein, sortieren und organisieren Stückgutbewegungen zwischen ihren Verteilzentren, die auch als Zustellbasen und/oder Hubs bezeichnet werden. Beim Transport werden nahezu fast durchweg genormte Wechselbehälter mit festen Wänden und Rolltoren an einer Stirnseite verwendet, in denen die Stückgüter beispielsweise Packstücke, kleinteilige Sendungen, wie z.B. Päckchen und/oder Pakete, in Rollboxen und/oder auf Paletten befördert werden. Um möglichst effizient die Stückgüter vom Sender zu Empfänger zu transportieren, werden zudem möglichst viele der Prozessschritte in den Hubs und/oder Zustellbasen weitestgehend automatisiert abgewickelt.

Die Hubs und/oder Zustellbasen bilden ein feingliedriges im Wesentlichen hierarchisch aufgebautes Sortier- und Verteilungsnetz: Die von Kunden in Filialen oder Abgabestationen eingelieferten Stückgüter und/oder die direkt beim Kunden abgeholten Stückgüter werden zu einem entsprechenden Start-Verteilzentrum (auch Abgangs-Hub genannt) befördert. Anhand eines Leitcodes, per automatischer Anschriftenlesung, und/oder Videocodierung erfolgt die Sortierung und die Weiterleitung an das der Sendung entsprechende Ziel-Verteilzentrum (auch Eingangs-Hub genannt). Zwischen den Verteilzentren erfolgt die Beförderung beispielsweise im Direktverkehr per Wechselbehälter. Die Stückgüter werden im Ziel-Verteilzentrum wiederum entsprechend ihrer zugeordneten Leitinformation sortiert und anschließend im Rahmen der Feinverteilung mit Versorgungsfahrten an die regionalen Zustellbasen weitergeleitet. Von der regionalen Zustellbasis übernimmt dann der Zusteller den weiteren Transport der Sendung zum Empfänger oder auch zu einer vom Empfänger gewählten Abholstation. Je nach Auslastung und Wirtschaftlichkeit, kann auch vorgesehen sein, dass das Start-Verteilzentrum Stückgüter direkt an eine regionalen Zustellbasis außerhalb seiner Region sendet und somit das Ziel-Verteilzentrum von Stückgutmengen entlastet. Derart wird zudem die Flexibilität des Verteilnetzes erhöht. Dadurch, dass die regionalen Zustellbasen die Stückgüter ihres Versorgungsbereichs selbst sortieren, entlasten sie zudem das Ziel-Verteilzentrum von der Feinsortierung.

Bei der Zustellung von den regionalen Zustellbasen zum Empfänger wird zudem aus Wirtschaftlichkeits- und Kapazitätsgründen zwischen Regelbezirken und Verbundbezirken unterschieden. In Regelbezirken findet eine Regelauslieferung statt, bei der Stückgüter, beispielsweise Paketsendungen und Päckchen, getrennt von Briefsendungen ausgeliefert werden. In Verbundbezirken erfolgt hingegen eine Verbundauslieferung, bei der die Stückgüter und Briefsendungen gemeinsam ausgeliefert werden. Ob ein Bezirk ein Regelbezirk oder ein Verbundbezirk ist, hängt unter anderem von dem Paket- und Briefsendungsaufkommen in dem Bezirk ab, und kann sich über die Zeit auch ändern.

Die Unterscheidung von Regelbezirken und Verbundbezirken, und somit die Einteilung der Stückgüter in zwei Kategorien, führt in den regionalen Zustellbasen, die die Feinsortierung der Stückgüter durchführen dazu, dass bei der Sortierung jeweils geprüft werden muss, ob in der Nähe der regionalen Zustellbasis Verbund- oder Regelbezirke liegen. Dies macht die Sortierprozesse in den regionalen Zustellbasen komplex und führt zudem dazu, dass die Sortierprozesse in den regionalen Zustellbasen jeweils je nach Brief- und Stückgutaufkommen umgestellt werden müssen. Zudem besteht aufgrund des zunehmenden Stückgutaufkommens ein Bedürfnis die Kapazitäten zu erhöhen.

### Beschreibung der Erfindung

Ausgehend von dieser Situation ist es eine Aufgabe der vorliegenden Erfindung, ein System und ein entsprechendes Verfahren anzugeben, um die Effizienz beim Umschlagen und/oder Sortieren von Stückgütern zu erhöhen. Zudem ist es Aufgabe der vorliegenden Erfindung, ein System und ein entsprechendes Verfahren anzugeben, um eine flexible Nutzung einer Zustellbasis zu ermöglichen, bei der schnell und einfach auf unterschiedliche Brief- und Stückgutaufkommen reagiert werden kann.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch ein System zum Umschlagen und/oder Sortieren von Stückgütern in Abtragebereiche gelöst, wobei das System eine Fördereinrichtung mit einer in eine Transportrichtung bewegbaren Transportfläche für Stückgüter, und eine Vielzahl an Aufnahmeeinrichtungen zum Verbringen der Stückgüter von der Transportfläche der Fördereinrichtung in den jeweiligen Abtragebereich umfasst, wobei die Fördereinrichtung als horizontaler Rundkurs ausgestaltet ist, und wenigstens zwei einander gegenüberliegende Abschnitte aufweist, wobei eine erste Gruppe Aufnahmeeinrichtungen von dem ersten der zwei Abschnitte in ein Inneres des Rundkurses zeigen, wobei eine zweite Gruppe Aufnahmeeinrichtungen von dem zweiten der zwei Abschnitte in das Innere des Rundkurses zeigen, und wobei im Inneren des Rundkurses wenigstens eine Aufnahmeeinrichtung der ersten Gruppe seitlich direkt neben einer Aufnahmeeinrichtung der zweiten Gruppe angeordnet ist.

Die Aufgabe wird zudem von einem Verfahren zum Umschlagen und/oder Sortieren von Stückgütern in Abtragebereiche mit einem System umfassend eine Fördereinrichtung mit einer in eine Transportrichtung bewegbaren Transportfläche für Stückgüter, und eine Vielzahl an Aufnahmeeinrichtungen zum Verbringen der Stückgüter von der Transportfläche der Fördereinrichtung in den jeweiligen Abtragebereich, wobei die Fördereinrich-Stückgutaufkommen umgestellt werden müssen. Zudem besteht aufgrund des zunehmenden Stückgutaufkommens ein Bedürfnis die Kapazitäten zu erhöhen.

Dokument US 2015/217334 A1 offenbart eine Vorrichtung gemäß dem Oberbegriff des Anspruchs 1 und beschreibt ein System und ein Verfahren zum Sortieren von Paketen, das die Artikel für jedes entsprechende Ziel an einer Außenkante anordnet.

Dokument US 6 292 710 B1 bezieht sich auf das automatische Befördern und Sortieren von Gegenständen wie Paketen von einer oder mehreren Ladestellen zu einer Vielzahl von Ausgabezielen. Konkret beschreibt das Dokument ein Fördersystem, das Pakete unter einer bestimmten Steuerung auf beiden Seiten eines Förderwegs auf dafür vorgesehene Ausgaberutschen, Behälter oder nachfolgende Förderbänder auswerfen kann.

### Beschreibung der Erfindung

Ausgehend von dieser Situation ist es eine Aufgabe der vorliegenden Erfindung, ein System und ein entsprechendes Verfahren anzugeben, um die Effizienz beim Umschlagen und/oder Sortieren von Stückgütern zu erhöhen. Zudem ist es Aufgabe der vorliegenden Erfindung, ein System und ein entsprechendes Verfahren anzugeben, um eine flexible Nutzung einer Zustellbasis zu ermöglichen, bei der schnell und einfach auf unterschiedliche Brief- und Stückgutaufkommen reagiert werden kann.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch ein System zum Umschlagen und/oder Sortieren von Stückgütern in Abtragebereiche gelöst, wobei das System eine Fördereinrichtung mit einer in eine Transportrichtung bewegbaren Transportfläche für Stückgüter, und eine Vielzahl an Aufnahmeeinrichtungen zum Verbringen der Stückgüter von der Transportfläche der Fördereinrichtung in den jeweiligen Abtragebereich umfasst, wobei die Fördereinrichtung als horizontaler Rundkurs ausgestaltet ist, und wenigstens zwei einander gegenüberliegende Abschnitte aufweist, wobei eine erste Gruppe Aufnahmeeinrichtungen von dem ersten der zwei Abschnitte in ein Inneres des Rundkurses zeigen, wobei eine zweite Gruppe Aufnahmeeinrichtungen von dem zweiten der zwei Abschnitte in das Innere des Rundkurses zeigen, und wobei im Inneren des Rundkurses wenigstens eine Aufnahmeeinrichtung der ersten Gruppe seitlich direkt neben einer Aufnahmeeinrichtung der zweiten Gruppe angeordnet ist.

Die Aufgabe wird zudem von einem Verfahren zum Umschlagen und/oder Sortieren von Stückgütern in Abtragebereiche mit einem System umfassend eine Fördereinrichtung mit einer in eine Transportrichtung bewegbaren Transportfläche für Stückgüter, und eine Vielzahl an Aufnahmeeinrichtungen zum Verbringen der Stückgüter von der Transportfläche der Fördereinrichtung in den jeweiligen Abtragebereich, wobei die Fördereinrichtung als horizontaler Rundkurs ausgestaltet ist, und wenigstens zwei einander gegenüberliegende Abschnitte aufweist, wobei eine erste Gruppe Aufnahmeeinrichtungen von dem ersten der zwei Abschnitte in ein Inneres des Rundkurses zeigen, wobei eine zweite Gruppe Aufnahmeeinrichtungen von dem zweiten der zwei Abschnitte in das Innere des Rundkurses zeigen, und wobei im Inneren des Rundkurses wenigstens eine Aufnahmeeinrichtung der ersten Gruppe seitlich direkt neben einer Aufnahmeeinrichtung der zweiten Gruppe angeordnet ist, gelöst, mit dem Schritt:
- Sortieren der Stückgüter derart, dass Verbundbezirksstückgüter mit Aufnahmeeinrichtungen der ersten Gruppe zu den jeweiligen Abtragebereichen verbracht werden und dass Regelbezirksstückgüter mit Aufnahmeeinrichtungen der zweiten Gruppe zu den jeweiligen Abtragebereichen verbracht werden.

Ein Aspekt der Erfindung liegt darin, dass die Aufnahmeeinrichtungen in das Innere des Rundkurses zeigen, von zwei einander gegenüberliegenden Abschnitten des Rundkurses ausgehen, und im Inneren des Rundkurses wenigstens eine Aufnahmeeinrichtung der ersten Gruppe seitlich direkt neben einer Aufnahmeeinrichtung der zweiten Gruppe angeordnet ist. Die Anordnung der Aufnahmeeinrichtungen erlaubt, dass beim Sortieren die Stückgüter, die in einem Verbundbezirk ausgeliefert werden - sogenannte Verbundbezirksstückgüter, sprich bevorzugt Stückgüter die zusammen mit Briefsendungen ausgeliefert werden - mit Aufnahmeeinrichtungen der ersten Gruppe zu den jeweiligen Abtragebereichen verbracht werden, und Stückgüter, die in einem Regelbezirk ausgeliefert werden - sogenannte Regelbezirksstückgüter, sprich bevorzugt Stückgüter die ausschließlich mit anderen Stückgütern ausgeliefert werden - mit Aufnahmeeinrichtungen der zweiten Gruppe zu den jeweiligen Abtragebereichen verbracht werden. Insbesondere erlaubt die Anordnung eine kurzfristige Zustelltypanpassung, ohne dabei die Anordnung der Aufnahmeeinrichtungen zueinander ändern zu müssen, so dass die Flexibilität erhöht wird. Es kann also mittels des Systems und des Verfahrens flexible auf die sich verändernden Mengen von Stückgütern unterschiedlicher Kategorie, die im Rahmen dieser Anmeldung als Verbundbezirksstückgut und Regelbezirksstückgut bezeichnet werden, reagiert werden. Das Verfahren lässt sich aber nicht ausschließlich mit Verbundbezirksstückgütern und Regelbezirksstückgütern durchführen, sondern ermöglicht generell bei Stückgütern, die zwei verschiedenen Kategorien zugehörig sind, eine effiziente Abtragung in den Abtragebereichen.

In anderen Worten erfolgt durch die Anordnung der Aufnahmeeinrichtungen eine räumliche Trennung der entsprechenden Abtragebereiche dahingehend, dass sich die Abtragebereiche auf zwei sich gegenüberliegenden Seiten befinden. Entsprechend können Abtragebereiche auf der einen Seite für Verbundbezirksstückgüter verwendet werden und Abtragebereiche auf der anderen Seite für Regelbezirksstückgüter verwendet werden. Aufgrund der räumlichen Trennung ist eine flexible Umstellung der Sortierprozesse möglich, ohne dass die Anordnung der Aufnahmeeinrichtungen bei der Umstellung geändert werden müsste. Da die Verbundbezirksstückgüter beim Sortieren in die Abtragebereiche der Verbundseite und Regelbezirksstückgüter in die Abtragebereiche der Regelseite gefördert werden, wird eine Trennung der Verbund- und Regelbezirksstückgüter gewährleistet, so dass die Notwendigkeit, sich vorab zu überlegen, ob in der Nähe der regionalen Zustellbasis Verbund- oder Regelbezirke liegen, komplett entfällt.

Zudem führt die Anordnung der Aufnahmeeinrichtungen dazu, dass sich die Abtragebereiche auf zwei sich gegenüberliegenden Seiten befinden, so dass das nachgelagerte Beladen von Zustellfahrzeugen mit den Stückgütern auch auf zwei sich gegenüberliegenden Seiten durchgeführt werden kann. Somit ist gegenüber einer Anordnung, bei der die Aufnahmeeinrichtungen alle in eine Richtung weisen mehr Platz für die Zustellfahrzeuge vorhanden, bzw. es können bei gleichbleibendem Platzangebot für ein Zustellfahrzeug bis zu doppelt so viele Zustellfahrzeuge verwendet werden. Entsprechend kann die Kapazität erhöht werden.

Ein weiterer Aspekt der Erfindung ist, dass die Raumausnutzung gegenüber einer Anordnung, bei der die Aufnahmeeinrichtungen nicht ins Innere des Rundkurses zeigen, erhöht ist, da derart kaum Leerraum im Inneren des Rundkurses vorhanden ist. Dies führt zu einer Kosteneinsparung beim Bau des Systems und erlaubt, das System umweltfreundlich zu betreiben, da beispielsweise kein nicht nutzbarer Raum unnötig geheizt oder klimatisiert werden muss.

Wie bereits erwähnt, umfasst die Fördereinrichtung die in die Transportrichtung bewegbare Transportfläche und ist als horizontaler Rundkurs mit den wenigstens zwei einander gegenüberliegenden Abschnitten ausgestaltet. Mit einem horizontalen Rundkurs ist vorliegend gemeint, dass ein Normalenvektor der Transportfläche über den gesamten Rundkurs der Fördereinrichtung im Raum nach oben weist und nicht wie bei einem vertikalen Rundkurs zur Hälfte des Rundkurses im Raum nach unten weist. Der Rundkurs kann grundsätzlich jede beliebige in sich geschlossene Form aufweisen, beispielsweise oval, oder kreisförmig, oder die Form einer Acht. Bevorzugt ist aber vorgesehen, dass die einander gegenüberliegenden Abschnitte des Rundkurses parallel zueinander verlaufen. Dies vereinfacht es, dass im Inneren des Rundkurses wenigstens eine Aufnahmeeinrichtung der ersten Gruppe seitlich direkt neben einer Aufnahmeeinrichtung der zweiten Gruppe angeordnet ist. Bevorzugt ist die Fördereinrichtung zudem dazu eingerichtet, die auf der Transportfläche anordenbaren und/oder angeordneten Stückgüter in die Aufnahmeeinrichtung zu befördern. Beispielsweise kann die Fördereinrichtung dazu ausgestaltet sein, die Stückgüter quer zur Transportrichtung zu bewegen. Bevorzugt weist die Fördereinrichtung dafür eine Ausschleuseinrichtung und/oder eine Abgabeeinrichtung auf. Die Ausschleuseinrichtung und/oder Abgabeeinrichtung kann ortsfest der Aufnahmeeinrichtung zugeordnet sein oder alternativ wie bei einem Quergurtsorter mit der Fördereinrichtung umlaufen. Bevorzugt ist die Fördereinrichtung dazu ausgestaltet, einen lagegerechten Übergang des Stückguts von der Transportfläche in die Aufnahmeeinrichtung zu ermöglich.

Unter Stückgut ist vorliegend ein zumeist nicht normiertes Transportgut gemeint. Bevorzugt ist das Stückgut maschinenfähig. Beispielsweise handelt es sich beim Stückgut um ein Packstück, ein Paket, Päckchen und/oder einen (Groß-)Brief. Das Stückgut weist bevorzugt seitliche Abmessungen von ≥ 100 mm x 150 mm x 10 mm auf und/oder ein Gewicht von ≥ 100 g. Weiter bevorzugt weist das Stückgut seitliche Abmessungen von ≤ 600 mm x 600 mm x 1200 mm auf und/oder ein Gewicht von ≤ 31,5 kg. Andere Abmessungen und/oder Gewichte des Stückguts sind aber ebenfalls möglich.

Gemäß einer bevorzugten Weiterbildung der Erfindung ist vorgesehen, dass ein fördereinrichtungsfernes Ende der Aufnahmeeinrichtung tiefer liegt als ein fördereinrichtungsnahes Ende der Aufnahmeeinrichtung. Zudem ist in diesem Zusammenhang bevorzugt vorgesehen, dass der Rundkurs der Fördereinrichtung nicht ebenerdig verläuft, sondern erhöht ist. Da weiterhin im Inneren des Rundkurses wenigstens eine Aufnahmeeinrichtung der ersten Gruppe seitlich direkt neben einer Aufnahmeeinrichtung der zweiten Gruppe angeordnet ist, weisen die nebeneinander angeordneten Aufnahmeeinrichtungen von der Seite betrachtet bevorzugt eine kreuzweise Anordnung in der Form eines X auf. Dies Anordnung ermöglicht eine besonders gute Platzausnutzung in dem Abtragebereich. Derart lässt sich die Effizienz beim Abtragen der Stückgüter in den Abtragebereichen steigern.

Gemäß einer weiteren bevorzugten Weiterbildung der Erfindung ist vorgesehen, dass die Vielzahl an Aufnahmeeinrichtungen derart angeordnet ist, dass sich im Inneren des Rundkurses Aufnahmeeinrichtungen von der ersten Gruppe mit Aufnahmeeinrichtungen von der zweiten Gruppe abwechseln. In anderen Worten ist bevorzugt im Inneren des Rundkurses eine sich wiederholende gekreuzte Anordnung der Aufnahmeeinrichtungen der ersten und zweiten Gruppe vorgesehen. Bevorzugt weist daher im Inneren des Rundkurses jede zweite Aufnahmeeinrichtung auf eine Seite und die verbleibenden Aufnahmeeinrichtungen auf die gegenüberliegende Seite. Derart sind die Abtragebereiche regelmäßig verteilt, was zu einer gleichmäßigen Platzausnutzung beiträgt und erlaubt, die Abtragung der Stückgüter in den Abtragebereichen effizienter zu gestalten, so dass die Sortierleistung erhöht wird. Zudem wird dadurch die Verbringung der Stückgüter in die Zustellfahrzeuge stark erleichtert.

Gemäß einer weiteren bevorzugten Weiterbildung der Erfindung ist in diesem Zusammenhang zudem vorgesehen, dass die Aufnahmeeinrichtungen paarweise ausgebildet sind. Bevorzugt sind die Aufnahmeeinrichtungen als Rollenbahnen und/oder Rutschen und insbesondere als Rollenbahnenpaare und/oder Rutschenpaare ausgebildet. Eine paarweise Ausbildung bedeutet bevorzugt, dass die Aufnahmeeinrichtung zwei in die gleiche Richtung zeigende Bahnen zum Aufnehmen der Stückgüter von der Fördereinrichtung und zum Weiterleiten der Stückgüter an den Abtragebereich umfasst. Derart entsteht im Inneren des Rundkurses eine paarweise gekreuzte Anordnung von Rutschen und/oder Rollbahnen. Bevorzugt weist die Aufnahmeeinrichtung zudem eine bewegliche und/oder schwenkbare angetriebene Rollenbahn am fördereinrichtungsnahen Ende der Aufnahmeeinrichtung auf und/oder im Anschluss daran in Richtung fördereinrichtungsfernes Ende der Aufnahmeeinrichtung eine nicht bewegliche und/oder nicht schwenkbare angetriebene Rollenbahn. Zudem ist in diesem Zusammenhang bevorzugt vorgesehen, dass jeweils eine Ausschleuseinrichtung und/oder Abgabeeinrichtung der Fördereinrichtung genau eine Aufnahmeeinrichtung - also bevorzug ein Rollenbahnenpaar und/oder Rutschenpaar bedient. Weiter bevorzugt kann vorgesehen sein, dass die Aufnahmeeinrichtungen paarweise zum Bedienen zweier Abtragebereiche ausgebildet ist. Somit sind bevorzugt auch die Abtragebereiche regelmäßig paarweise angeordnet, was eine besonders günstige Platzausnutzung an den Abtragebereichen erlaubt und zu besonders effizienten Arbeitsabläufen führt.

Gemäß einer weiteren bevorzugten Weiterbildung der Erfindung ist vorgesehen, dass das System eine Abtragebereichfreifläche an den Abtragebereichen zum Aufnehmen der Stückgüter von den Aufnahmeeinrichtungen umfasst, wobei die Abtragebereichfreifläche am Ende jeder jeweiligen Aufnahmeeinrichtung, unterhalb der Fördereinrichtung und/oder unterhalb der seitlich benachbarten Aufnahmeeinrichtung angeordnet ist. Besonders bevorzugt ist die Abtragebereichfreifläche jeder Aufnahmeeinrichtung unterhalb der Fördereinrichtung und unterhalb der seitlich benachbarten Aufnahmeeinrichtung angeordnet. Die gekreuzte Anordnung der bevorzugt als Rollenbahnenpaare und/oder Rutschenpaare ausgestalteten Aufnahmeeinrichtungen führt zu einem immensen Platzgewinn in den Abtragebereichen, so dass dort die Abtragebereichfreifläche vorgesehen sein kann. In Zusammenhang DD 41080 mit der paarweisen Ausbildung der Aufnahmeeinrichtung bietet die Abtragebereichfreifläche zudem bevorzugt Platz für zwei Abtragebereiche. Die Abtragebereichfreifläche ermöglicht unterschiedliche Abtragungen der Stückgüter von den Abtragebereichen in die Zustellfahrzeuge und/oder in Behälter wie Rollwagen und/oder Rollbehälter, ohne dass dafür die Anordnung der Aufnahmeeinrichtungen zueinander geändert werden müsste.

In Zusammenhang mit der Abtragung der Stückgüter ist gemäß einer weiteren bevorzugten Weiterbildung der Erfindung vorgesehen, dass das System eine Mehrzahl an Behälter umfasst, wobei die Behälter auf der Abtragebereichfreifläche angeordnet sind und/oder dass das System einen Ausziehtisch umfasst, wobei sich der Ausziehtisch der Aufnahmeeinrichtung anschließt und auf der Abtragebereichfreifläche angeordnet ist. Der Ausziehtisch umfasst bevorzugt nicht angetriebene Rollen und kann mit dem fördereinrichtungsfernen Ende der Aufnahmeeinrichtung verbunden sein oder mit dem fördereinrichtungsfernen Ende der Aufnahmeeinrichtung verbindbar sein. Weiter bevorzugt handelt es sich bei den Behältern um Rollbehälter und/oder Rollwagen, die für die Beladung der Stückgüter in Zustellfahrzeuge verwendet werden. Besonders bevorzugt kann die Konfigurierung des jeweiligen Abtragebereichs mit Behältern und/oder Ausziehtischen angepasst werden, je nachdem, ob in dem Abtragebereich Verbundbezirksstückgüter oder Regelbezirksstückgüter verarbeitet werden.

In diesem Zusammenhang ist gemäß einer weiteren bevorzugten Weiterbildung der Erfindung vorgesehen, dass eine Konfiguration von Behälter und/oder Ausziehtischen auf nebeneinanderliegenden Abtragebereichfreiflächen gleichartig ist und/oder dass eine Konfiguration von Behälter und/oder Ausziehtischen auf sich gegenüberliegenden Abtragebereichfreiflächen unterschiedlich ist. Bevorzugt weisen Abtragebereiche, bei denen Verbundbezirksstückgüter verarbeitet werden, lediglich Behälter auf und keine ausgezogenen Ausziehtische und/oder keine Ausziehtische. Weiter bevorzugt weisen Abtragebereiche, bei denen Regelbezirksstückgüter verarbeitet werden, Behälter und Ausziehtische, besonderes bevorzugt ausgezogene Ausziehtische, auf. Mit Konfiguration von Behälter und/oder Ausziehtischen ist bevorzugt die Anzahl und Anordnung der Behälter und/oder der Ausziehtische und/oder der Status des Ausziehtisches - sprich ausgezogen oder nicht - auf der Abtragebereichfreifläche gemeint.

Gemäß einer weiteren bevorzugten Weiterbildung der Erfindung umfasst das System eine Gebäudehülle zur Einhausung der Fördereinrichtung und/oder Aufnahmeeinrichtung, wobei die Gebäudehülle eine Vielzahl an Toren und/oder Laderampen umfasst, und wobei pro Abtragebereichfreifläche wenigstens ein, bevorzugt zwei Tore und/oder Laderampen zugänglich sind. Die Gebäudehülle dient zum Schutz der Anlage und haust bevorzugt die Fördereinrichtung und die Aufnahmeeinrichtung ein. Weiter bevorzugt werden auch die Abtragebereichfreiflächen von der Gebäudehülle eingehaust. Um die Beladung der Zustellfahrzeuge zu ermöglichen, weist die Gebäudehülle weiter bevorzugt Tore und/oder Laderampen auf. Die Tore und/oder Laderampen sind bevorzugt an zwei sich gegenüberliegenden Seiten der Gebäudehülle angeordnet und besonders bevorzugt gleichmäßig über die zwei sich gegenüberliegenden Seiten der Gebäudehülle verteilt. Besonders bevorzugt führt die sich wiederholende gekreuzte Anordnung der Aufnahmeeinrichtungen dazu, dass die Abtragebereiche gleichmäßig an beiden Innenseiten der Gebäudehülle angeordnet sind. Somit können bevorzugt auch beide Außenseiten der Gebäudehüllen als Halte- und/oder Ladebereiche für Zustellfahrzeuge verwendet werden.

In diesem Zusammenhang ist zudem gemäß einer weiteren bevorzugten Weiterbildung der Erfindung vorgesehen, dass sich der Rundkurs der Fördereinrichtung im Wesentlichen rechteckig entlang einer Innenseite der Gebäudehülle erstreckt. Unter im Wesentlichen rechteckig ist insbesondere gemeint, dass die Ecken des Rechteckes abgerundet sind. Die zwei einander gegenüberliegenden Abschnitte erstrecken sich bevorzugt an der Längsseite des im Wesentlichen rechteckigen Rundkurses. Derart kann eine besonders effiziente Raumausnutzung stattfinden, da die bevorzugt als Rollenbahnenpaare und/oder Rutschenpaare ausgestalteten Aufnahmeeinrichtungen nach Innen in den Rundkurs zeigen, bevorzugt sich wiederholend gekreuzt angeordnet sind und die Abtragebereiche bevorzugt an der Längsseite der Gebäudehülle regelmäßig angeordnet sind, derart dass die Abtragebereichfreifläche am Ende jeder Aufnahmeeinrichtung, unterhalb des gegenüberliegenden Abschnittes der Fördereinrichtung und unterhalb der benachbarten Aufnahmeeinrichtung angeordnet ist.

Gemäß einer weiteren bevorzugten Weiterbildung der Erfindung ist zudem vorgesehen, dass das System eine Zuführeinrichtung, insbesondere ein Teleskopbandförderer, zum Zuführen der Stückgüter auf die Fördereinrichtung umfasst. Besonders bevorzugt sind mehrere Zuführeinrichtungen vorhanden und/oder die Zuführeinrichtungen dazu ausgestaltet, zum Entladen einer Wechselbrücke und/eine eines Transportfahrzeugs mit der Wechselbrücke und/oder dem Transportfahrzeug koppelbar zu sein. Derart kann auf effiziente Weise die Fördereinrichtung mit den Stückgütern zum Sortieren und/oder Umschlagen beladen werden.

Weiter bevorzugt ist vorgesehen, dass das System einen an der Fördereinrichtung angeordneten Scanner zum Scannen der Stückgüter umfasst. Derart kann das Stückgut und/oder einen Code des Stückgutes erfasst werden, um es beispielsweise gemäß dem Zustellbezirk in den entsprechenden Abtragebereich zu sortieren. Unter Zustellbezirk ist vorliegend ein spezifisches Sortierkriterium des Stückgutes gemeint. Bevorzugt handelt es sich beim Zustellbezirk um einen Teil eines besiedelten Gebiets, in den das Stückgut auszutragen ist und der bevorzugt von einem Zusteller bedient wird. Bevorzugt wird bei der Sortierung gemäß einer hinterlegten Adressliste auf Grundlage des vom Stückgut mittels des Scanners erfassten Codes auf den Zustellbezirk geschlossen.

In diesem Zusammenhang ist weiterhin gemäß einer bevorzugten Weiterbildung der Erfindung vorgesehen, dass das System eine Steuerung umfasst, wobei die Steuerung derart ausgestaltet ist, dass das System Verbundbezirksstückgüter - sprich Stückgüter einer Kategorie - mit Aufnahmeeinrichtungen der ersten Gruppe zu den Abtragebereichen verbringt und dass das System Regelbezirksstückgüter - sprich Stückgüter der anderen Kategorie - mit Aufnahmeeinrichtungen der zweiten Gruppe zu den Abtragebereichen verbringt. In anderen Worten ist bevorzugt vorgesehen, dass durch Programmierung der Steuerung erreicht wird, dass Verbundbezirksstückgüter nur zu den Abtragebereichen der Verbundseite und Regelbezirksstückgüter nur zu den Abtragebereichen der Regelseite rutschen, wodurch eine räumliche Trennung der Verbundbezirksstückgüter und Regelbezirksstückgüter gewährleistet ist. Zudem werden derart bevorzugt die Tore auf beiden Seiten der Gebäudehülle benutzt, so dass von den Abtragebereichen doppelt so viel Zustellfahrzeuge gleichzeitig beladen werden können, wie wenn nur eine Seite der Gebäudehülle genutzt werden würde.

Die Aufgabe der Erfindung wird wie bereits erwähnt weiterhin durch das Verfahren zum Umschlagen und/oder Sortieren von Stückgütern in Abtragebereiche bevorzugt mit dem oben beschriebenen System gelöst, mit dem Schritt:
- Sortieren der Stückgüter derart, dass Verbundbezirksstückgüter mit Aufnahmeeinrichtungen der ersten Gruppe zu den jeweiligen Abtragebereichen verbracht werden und dass Regelbezirksstückgüter mit Aufnahmeeinrichtungen der zweiten Gruppe zu den jeweiligen Abtragebereichen verbracht werden.

Die durch die oben beschriebene Anordnung der Aufnahmeeinrichtungen ermöglichte räumliche Trennung der Abtragebereiche für Verbundbezirksstückgüter und für Regelbezirksstückgüter, sowie der Platzgewinn an den Abtragebereichen, führt zu einer höheren Flexibilität des Systems. Es kann also mittels des Verfahrens flexible auf die sich verändernden Mengen von Stückgütern unterschiedlicher Kategorie (Verbundbezirksstückgut bzw. Regelbezirksstückgut) reagiert werden. Bevorzugt wird die Abtragebereichfreifläche dazu genutzt, leere Behälter zu bevorraten und insbesondere leere Behälter unterhalb der seitlich benachbarten Aufnahmeeinrichtungen zu bevorraten.

Weiterhin ermöglicht das erhöhte Platzangebot an den Abtragebereichen unterschiedliche Abtragungen der Stückgüter an den Abtragebereichen, ohne dass dafür die Anordnung der Aufnahmeeinrichtungen zueinander geändert werden müsste. Somit ist das Verfahren nicht nur zum Umschlagen und/oder Sortieren von Stückgütern in die Abtragebereiche geeignet, sondern ermöglicht auch das Umschlagen und/oder Sortieren der Stückgüter aus den Abtragebereichen.

In diesem Zusammenhang ist gemäß einer bevorzugten Weiterbildung der Erfindung vorgesehen, dass das Verfahren die folgenden Schritte umfasst:
- Sortieren der Stückgüter derart, dass Verbundbezirksstückgüter mehrerer Zustellbezirke an einen Abtragebereich verbracht werden,
- Abtragen der Verbundbezirksstückgüter an den Abtragebereichen in eine Mehrzahl an Behälter, wobei die Anzahl an Behälter wenigstens der Anzahl an Zustellbezirken entspricht und die Verbundbezirksstückgüter getrennt nach Zustellbezirk in die Behälter sortiert werden,
- Beladen eines Zustellfahrzeugs aus einem vollen Behälter unter Berücksichtigung des Zustellbezirks des Behälters.

In anderen Worten ist bei der Abtragung der Stückgüter in den Abtragebereichen bevorzugt vorgesehen, dass die Verbundbezirksstückgüter derart sortiert werden, dass Stückgüter mehrerer Zustellbezirke in einen gemeinsamen Abtragebereich verbracht werden, um dort weiter sortiert zu werden. Bevorzugt werden Stückgüter von mehr als zwei und besonders bevorzugt von vier verschiedenen Zustellbezirken in einen Abtragebereich verbracht. Die weitere Sortierung der Stückgüter erfolgt dann bevorzugt mittels den auf der Abtragebereichfreifläche vorhandenen Behältern derart, dass die Verbundbezirksstückgüter getrennt nach Zustellbezirk bevorzugt von Mitarbeitern manuell in die Behälter sortiert werden. Die Größe der Abtragebereichfreifläche erlaubt insbesondere, dass vier Verbundzustellbezirke in einem Abtragebereich verarbeitet werden können. Diesem Sortierprozess folgt bevorzugt ein nachgelagerter Beladungsvorgang eines Zustellfahrzeuges, das besonders bevorzugt vor dem von der Abtragebereichfreifläche zugänglichen Tor und/oder der Laderampe anordenbar ist und/oder angeordnet ist. Weiter bevorzugt können volle Behälter vor dem Tor zwischengelagert werden. Beispielsweise können derart bei 20 Abtragebereiche 80 Verbundbezirke bedient werden.

Alternativ zu dieser 4-zu-1-Abtragung, bei der die Verbundbezirksstückgüter von vier Verbundzustellbezirken mittels wenigstens vier Behältern sortiert werden, kann auch eine Abtragung nach dem Prinzip 4-zu-2 mit Negativausscheidung erfolgen. Auch derart können beispielsweise bei 20 Abtragebereichen 80 Verbundbezirke bedient werden. Diesbezüglich ist gemäß einer weiteren bevorzugten Weiterbildung der Erfindung vorgesehen, dass das Verfahren die folgenden Schritte umfasst:
- Sortieren der Stückgüter derart, dass Verbundbezirksstückgüter mehrerer Zustellbezirke in einen Abtragebereich verbracht werden,
- Abtragen der Verbundbezirksstückgüter in den Abtragebereichen in eine Mehrzahl an Behälter, wobei die Anzahl an Behälter wenigstens der Hälfte der Anzahl an Zustellbezirken entspricht und Verbundbezirksstückgüter zweier Zustellbezirke jeweils in einen Behälter sortiert werden,
- Beladen eines ersten Zustellfahrzeugs aus einem vollen Behälter mit Verbundbezirksstückgüter genau eines Zustellbezirks, und
- Beladen eines weiteren Zustellfahrzeugs mit den im Behälter zurückgebliebenen Verbundbezirksstückgütern des weiteren Zustellbezirks.

Wie zuvor beschrieben werden bevorzugt die Verbundbezirksstückgüter derart sortiert, dass Stückgüter mehrerer Zustellbezirke in einen gemeinsamen Abtragebereich verbracht werden, um dort weiter sortiert zu werden. Weiter bevorzugt werden Stückgüter von mehr als zwei und besonders bevorzugt von vier verschiedenen Zustellbezirken in einen Abtragebereich verbracht. Die weitere Sortierung der Stückgüter erfolgt dann ebenfalls bevorzugt mittels den auf der Abtragebereichfreifläche vorhandenen Behältern, indem die Verbundbezirksstückgüter bevorzugt von Mitarbeitern manuell in die Behälter sortiert werden. Dabei ist besonders bevorzugt vorgesehen, dass ein gemeinsamer Behälter für zwei Zustellbezirke verwendet wird. Beim nachfolgenden Beladen des Zustellfahrzeuges aus einem vollen Behälter, der dann entsprechend Verbundbezirksstückgüter zweier verschiedener Zustellbezirke enthält, erfolgt dann eine Negativausscheidung, derart dass ein zweites Zustellfahrzeug mit den in dem Behälter verbleibenden Verbundbezirksstückgüter beladen werden kann.

Im Hinblick auf die in den Regelbezirken erwartbaren höheren Stückgutmengen ist gemäß einer weiteren Weiterbildung der Erfindung bevorzugt vorgesehen, dass das Verfahren folgende Schritte umfasst:
- Sortieren der Stückgüter derart, dass Regelbezirksstückgüter zweier Zustellbezirke in einen Abtragebereich verbracht werden,
- Abtragen der Regelbezirksstückgüter in den Abtragebereichen durch:
- Beladen eines ersten Zustellfahrzeugs, wobei das Zustellfahrzeug mit Regelbezirksstückgütern genau eines Zustellbezirks beladen wird, und Regelbezirksstückgüter des weiteren Zustellbezirks jeweils in einem Behälter zwischengelagert werden,
- Beladen eines weiteren Zustellfahrzeugs mit den im Behälter zwischengelagerten Regelbezirksstückgütern des weiteren Zustellbezirks.

In anderen Worten werden bei den Regelbezirksstückgüter die Zustellfahrzeuge bevorzugt direkt mit Negativausscheidung beladen, wobei die beim Beladen ausgeschiedenen Regelbezirksstückgüter in den Behältern zwischengelagert werden, um nachfolgend aus den Behältern in ein weiteres Zustellfahrzeug geladen zu werden. Beispielsweise können derart bei 20 Abtragebereichen 40 Regelbezirke bedient werden. Zudem erlaubt das größere Platzangebot an das erste und/oder an das zweite Zustellfahrzeug einen Anhänger zu koppeln, so dass mit einer Fahrzeugtour bis zu doppelt so viel Regelbezirksstückgüter ausgeliefert werden können als ohne Anhänger.

Gemäß einer weiteren bevorzugten Weiterbildung der Erfindung ist zudem vorgesehen, dass das Verfahren den Schritt
- Zuführen der Stückgüter auf die Fördereinrichtung mittels einer Zuführeinrichtung umfasst, wobei die Stückgüter lose zugeführt werden.

Besonders bevorzugt werden die Stückgüter ausschließlich lose zugeführt. Dies ermöglicht, dass beim System und beim Verfahren auf eine Zuführung von Stückgütern in Rollbehältern verzichtet werden kann, so dass weitere, bisher für diese Rollbehälter benötigte Flächen, freiwerden.

### Kurze Beschreibung der Zeichnungen

Nachfolgend wird die Erfindung unter Bezugnahme auf die anliegenden Zeichnungen anhand von bevorzugten Ausführungsbeispielen näher erläutert.

In den Zeichnungen zeigt
- Fig. 1: eine schematische Ansicht eines Systems zum Umschlagen und/oder Sortieren von Stückgütern in Abtragebereiche, gemäß einem bevorzugten Ausführungsbeispiel der Erfindung,
- Fig. 2: eine perspektivische Darstellung eines Systems zum Umschlagen und/oder Sortieren von Stückgütern in Abtragebereiche, gemäß einem weiteren bevorzugten Ausführungsbeispiel der Erfindung,
- Fig. 3: eine schematische Schnittansicht des Systems aus Figur 2 mit zwei Aufnahmeeinrichtungen,
- Fig. 4: eine schematische Draufsicht und eine schematische Schnittansicht bei einer Höhe von 2 m 10 cm des Systems aus Figur 2,
- Fig. 5: eine schematische Ansicht von Abtragebereichen eines Systems zum Abtragen von Regelbezirksstückgütern, gemäß einem bevorzugten Ausführungsbeispiel der Erfindung,
- Fig. 6: eine schematische Ansicht von Abtragebereichen eines Systems zum Abtragen von Regelbezirksstückgütern als Alternative zu Fig. 5, gemäß einem bevorzugten Ausführungsbeispiel der Erfindung, und
- Fig. 7: eine schematische Ansicht von Abtragebereichen eines Systems zum Abtragen von Verbundbezirksstückgütern, gemäß einem bevorzugten Ausführungsbeispiel der Erfindung.

### Detaillierte Beschreibung der Ausführungsbespiele

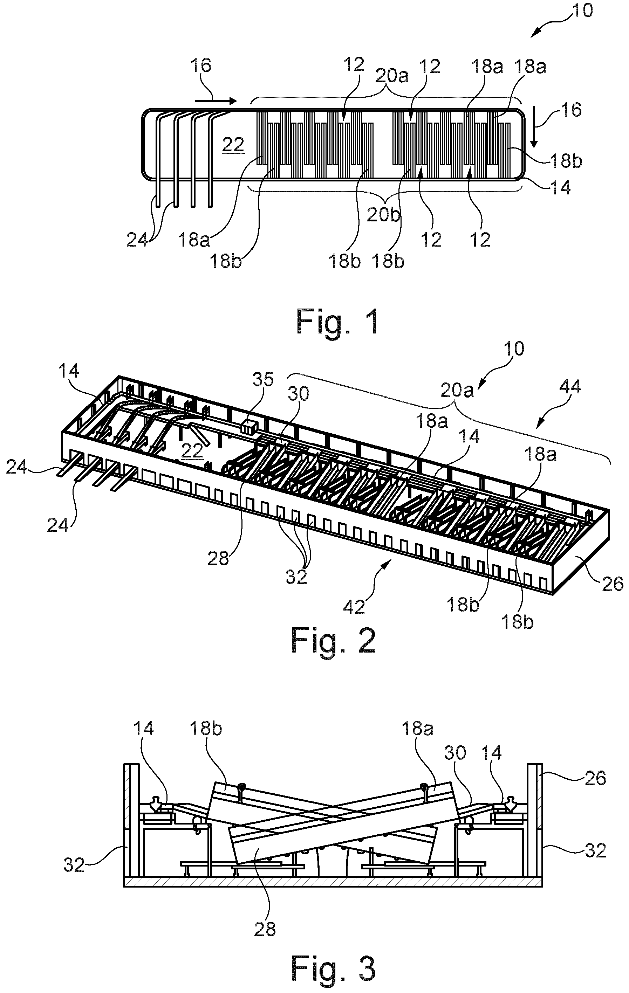

Figur 1 zeigt eine schematische Ansicht eines Systems 10 zum Umschlagen und/oder Sortieren von Stückgütern (die Stückgüter sind selbst nicht gezeigt) in Abtragebereiche 12, gemäß einem bevorzugten Ausführungsbeispiel der Erfindung. Das System 10 umfasst eine Fördereinrichtung 14 mit einer in eine Transportrichtung 16 bewegbaren Transportfläche für Stückgüter und eine Vielzahl an Aufnahmeeinrichtungen 18 zum Verbringen der Stückgüter von der Transportfläche der Fördereinrichtung 14 in die jeweiligen Abtragebereiche 12. Die Fördereinrichtung 14 ist als horizontaler Rundkurs ausgestaltet und weist wenigstens zwei einander gegenüberliegende Abschnitte 20a, 20b auf, wobei eine erste Gruppe Aufnahmeeinrichtungen 18a von dem ersten der zwei Abschnitte 20a, 20b in ein Inneres 22 des Rundkurses zeigen, wobei eine zweite Gruppe Aufnahmeeinrichtungen 18b von dem zweiten der zwei Abschnitte 20a, 20b in das Innere 22 des Rundkurses zeigen, und wobei im Inneren 22 des Rundkurses wenigstens eine Aufnahmeeinrichtung der ersten Gruppe 18a seitlich direkt neben einer Aufnahmeeinrichtung der zweiten Gruppe 18b angeordnet ist. Wie in Figur 1 zu erkennen sind die Vielzahl an Aufnahmeeinrichtungen 18 zudem derart angeordnet, dass sich im Inneren 22 des Rundkurses Aufnahmeeinrichtungen der ersten Gruppe 18a mit Aufnahmeeinrichtungen der zweiten Gruppe 18b abwechseln. Zudem weist das System 10 eine Zuführeinrichtung 24, vorliegend vier Teleskopbandförderer 24, zum Zuführen der Stückgüter auf die Fördereinrichtung 14 auf.

Figur 2 zeigt eine perspektivische Darstellung eines weiteren Ausführungsbeispiels eines Systems 10 zum Umschlagen und/oder Sortieren von Stückgütern in Abtragebereiche 12 gemäß einem weiteren bevorzugten Ausführungsbeispiel der Erfindung. Analog zum Ausführungsbeispiel in Figur 1 umfasst das System 10 eine Fördereinrichtung 14 und eine Vielzahl an Aufnahmeeinrichtungen 18. Die Fördereinrichtung 14 ist ebenfalls als horizontaler Rundkurs ausgestaltet und weist wenigstens zwei einander gegenüberliegende Abschnitte 20a, 20b auf, wobei der zweite Abschnitt 20b aufgrund der perspektivischen Darstellung in Figur 2 nicht sichtbar ist. Das System 10 umfasst in diesem Ausführungsbeispiel zudem eine Gebäudehülle 26 zur Einhausung der Fördereinrichtung 14 und Aufnahmeeinrichtungen 18. Der Rundkurs der Fördereinrichtung 14 erstreckt sich entlang einer Innenseite der Gebäudehülle 26 und weist eine im Wesentlichen rechteckige Form mit abgerundeten Ecken auf. Zudem verläuft der Rundkurs der Fördereinrichtung 14 nicht ebenerdig, sondern erhöht. Die Gebäudehülle 26 ist im vorliegenden Ausführungsbeispiel 21 m breit und 103,4 m lang.

Die zwei einander gegenüberliegenden Abschnitte 20a, 20b verlaufen vorliegend parallel zueinander und entsprechen den zwei sich gegenüberliegenden Längsseiten des Rechtecks des Rundkurses. Wie zudem in Figur 2 zu erkennen ist, zeigt eine erste Gruppe Aufnahmeeinrichtungen 18a von dem ersten der zwei Abschnitte 20a, 20b in das Innere 22 des Rundkurses, und eine zweite Gruppe Aufnahmeeinrichtungen 18b von dem zweiten der zwei Abschnitte 20a, 20b in das Innere 22 des Rundkurses. Die Aufnahmeeinrichtungen 18 sind vorliegend als Rutschenpaare 18 ausgestaltet. Dadurch liegt ein fördereinrichtungsfernes Ende 28 der Aufnahmeeinrichtung 18 tiefer als ein fördereinrichtungsnahes Ende 30 der Aufnahmeeinrichtung 18. Zudem sind die Rutschenpaare 18 dazu ausgestaltet, zwei Abtragebereiche 12 zu bedienen. Im Inneren 22 des Rundkurses ist zudem eine Aufnahmeeinrichtung der ersten Gruppe 18a seitlich direkt neben einer Aufnahmeeinrichtung der zweiten Gruppe 18b angeordnet, wobei sich die Aufnahmeeinrichtungen der ersten Gruppe 18a mit Aufnahmeeinrichtungen der zweiten Gruppe 18b abwechseln. Entsprechend sind die Abtragebereiche 12 gleichmäßig paarweise an der Innenseite der Gebäudehülle 26 angeordnet.

Figur 3 zeigt eine schematische Schnittansicht des Systems aus Figur 2, wobei darauf gut zu erkennen ist, dass die gekreuzte Anordnung der Aufnahmeeinrichtungen 18 dazu führt, dass von der Seite betrachtet die Form eines X entsteht. Wie in Figur 2 und 3 zudem zu erkennen ist, weist die Gebäudehülle 26 eine Vielzahl an Toren 32 auf, wobei die Tore 32 auf beiden sich gegenüberliegenden Längsseiten der Gebäudehülle 26 vorhanden sind.

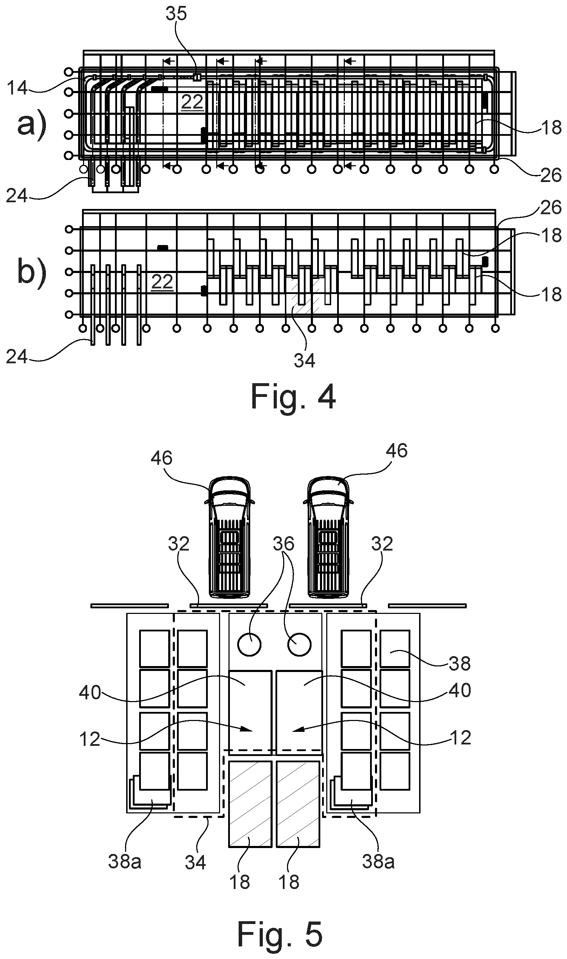

In Figur 4, die eine schematische Draufsicht und eine schematische Schnittansicht bei einer Höhe von 2 m 10 cm des Systems aus Figur 2 zeigt, ist zudem zu erkennen, dass die gekreuzte Anordnung der Rutschenpaare 18 mit viel Freiraum an den Abtragebereichen 12 einhergeht. Wie in Fig. 4b) - die als Schnittansicht entsprechend nur Objekte darstellt, die kleiner oder gleich 2 m 10 cm sind - dargestellt ist, weist das System 10 bei den Abtragebereichen 12 Abtragebereichfreiflächen 34 auf, wobei die Abtragebereichfreifläche 34 am Ende jeder jeweiligen Aufnahmeeinrichtung 18, unterhalb der Fördereinrichtung 14 und unterhalb der seitlich benachbarten Aufnahmeeinrichtung 18 angeordnet ist.

Zudem ist in Figur 4a), sowie auch in Figur 2 noch ersichtlich, dass das System 10 einen an der Fördereinrichtung 14 angeordneten Scanner 35 zum Scannen des Stückgutes umfasst.

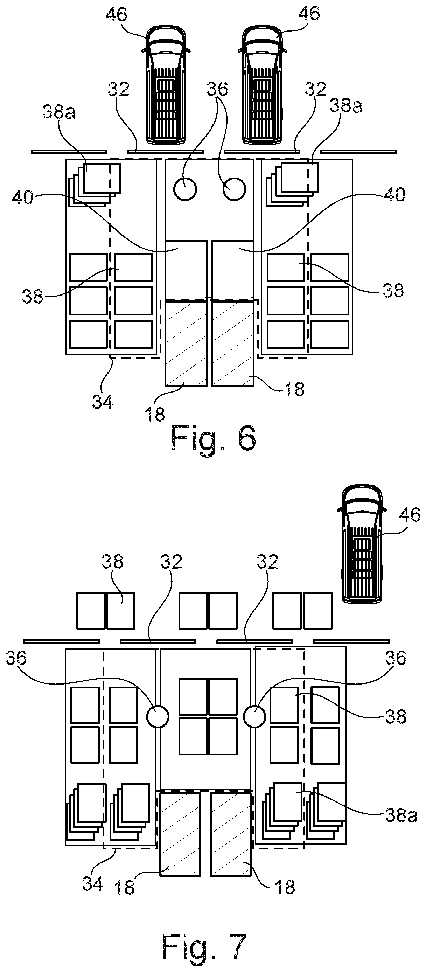

Die Figuren 5, 6 und 7 zeigen jeweils eine schematische Ansicht von Abtragebereichen 12 eines Systems 10 zum Abtragen von Stückgütern, gemäß bevorzugten Ausführungsbeispielen der Erfindung und illustrieren, wie die Abtragebereichfreifläche 34 genutzt werden kann. Da die Rutschenpaare 18 zum Bedienen zweier Abtragebereiche 12 ausgestaltet sind, sind auf der Abtragebereichfreifläche 34 zwei Abtragebereiche 12 untergebracht, wobei jeder Abtragebereich 12 von einem Mitarbeiter 36 bedient wird. Auf der Abtragebereichfreifläche 34 sind eine Mehrzahl an Behälter 38 - vorliegend Rollbehälter - angeordnet, sowie bei den in den Figuren 5 und 6 gezeigten Ausführungsbeispielen an die Rutschen 18 anschließend jeweils ein Ausziehtisch 40. Zudem bietet die Abtragebereichfreifläche 34 Platz, um weitere Behälter 38a zur Reserve zu lagern. Von der Abtragebereichfreifläche 34 sind wenigstens zwei Tore 32 der Gebäudehülle 26 zugänglich. Auf den Figuren 5, 6 und 7 sind zudem noch schematisch die Behälter 38 und Reservebehälter 38a eingezeichnet, die auf der rechts und links der Abtragebereichfreifläche 34 benachbarten Abtragebereichfreifläche des benachbarten Abtragebereichs angeordnet sind.

Mit Bezug zu den Figuren 2 und 5 bis 7 wird im Folgenden ein Verfahren zum Umschlagen und/oder Sortieren von Stückgütern in Abtragebereiche 12 mit dem System 10 erläutert. Das Verfahren umfasst den Schritt
- Sortieren der Stückgüter derart, dass Verbundbezirksstückgüter mit Aufnahmeeinrichtungen der ersten Gruppe 18a zu den jeweiligen Abtragebereichen 12 verbracht werden und dass Regelbezirksstückgüter mit Aufnahmeeinrichtungen der zweiten Gruppe 18b zu den jeweiligen Abtragebereichen 12 verbracht werden.

Wie in Figur 2 zu erkennen, werden die Stückgüter - je nach Kategorie und/oder Zustelltyps des Stückgutes - räumlich getrennt, wobei Stückgüter, die in einem Verbundbezirk ausgetragen werden - sogenannte Verbundbezirksstückgüter - zu den Abtragebereichen 12 an einer Seite 42 der Gebäudehülle 26 transportiert werden und Stückgüter, die in einem Regelbezirk ausgetragen werden - sogenannten Regelbezirksstückgüter - zu den Abtragebereichen 12 an der gegenüberliegenden Seite 44 der Gebäudehülle 26 transportiert werden. Die Gebäudehülle 26 weist eine Verbundseite 42 auf, bei der Abtragebereiche 12 angeordnet sind, die Verbundbezirksstückgüter bearbeiten und eine Regelseite 44, bei der Abtragebereiche 12 angeordnet sind, die Regelbezirksstückgüter bearbeiten.

Die Abtragebereiche 12 der Verbundseite 42 sind wie in Figur 7 gezeigt, ausgestaltet, wobei in Bezug zu Figur 7 das Verfahren zudem noch die folgenden Schritte umfasst:
- Sortieren der Stückgüter derart, dass Verbundbezirksstückgüter mehrerer Zustellbezirke - im vorliegenden in Figur 7 gezeigten Beispiel sind es vier Zustellbezirke - an einen Abtragebereich 12 verbracht werden,
- Abtragen der Verbundbezirksstückgüter an den Abtragebereichen 12 in eine Mehrzahl an Behälter 38, wobei die Anzahl an Behälter 38 wenigstens der Anzahl an Zustellbezirken entspricht und die Verbundbezirksstückgüter getrennt nach Zustellbezirk in die Behälter 38 sortiert werden,
- Beladen eines Zustellfahrzeugs 46 aus einem vollen Behälter 38 unter Berücksichtigung des Zustellbezirks des Behälters 38.

Die Sortierung der Stückgüter an den Abtragebereichen 12 der Verbundseite 42 erfolgt mittels den auf der Abtragebereichfreifläche 34 vorhandenen Behälter 38, derart dass die Verbundbezirksstückgüter getrennt nach Zustellbezirk von den Mitarbeitern 36 manuell in die Behälter 38 sortiert werden. Diesem Sortierprozess folgt der nachgelagerter Beladungsvorgang des Zustellfahrzeuges 46, das vor dem von der Abtragebereichfreifläche 34 zugänglichen Toren 32 angeordnet ist.

Die Abtragebereiche 12 der Regelseite 42 sind wie in Figur 5 oder 6 gezeigt ausgestaltet, wobei in Bezug zu den Figuren 5 oder 6 das Verfahren zudem noch die folgenden Schritte umfasst:
- Sortieren der Stückgüter derart, dass Regelbezirksstückgüter zweier Zustellbezirke in einen Abtragebereich 12 verbracht werden,
- Abtragen der Regelbezirksstückgüter in den Abtragebereichen 12 durch:
- Beladen eines ersten Zustellfahrzeugs 46, wobei das Zustellfahrzeug 46 mit Regelbezirksstückgütern genau eines Zustellbezirks beladen wird, und Regelbezirksstückgüter des weiteren Zustellbezirks jeweils in einem Behälter 38 zwischengelagert werden,
- Beladen eines weiteren Zustellfahrzeugs (in den Figuren 5 und 6 nicht gezeigt) mit den im Behälter 38 zwischengelagerten Regelbezirksstückgütern des weiteren Zustellbezirks.

Die Sortierung der Stückgüter in den Abtragebereichen 12 der Regelseite 44 erfolgt, indem die Mitarbeiter 36 direkt die Zustellfahrzeuge 46 mit Negativausscheidung mit Regelbezirksstückgütern beladen, wobei die beim Beladen ausgeschiedenen Regelbezirksstückgüter in den Behältern 38 zwischengelagert werden. Nachdem die Zustellfahrzeuge 46 beladen und weggefahren sind, können in einer zweiten Welle die in den Behältern 38 zwischengelagerten Regelbezirksstückgüter in weitere Zustellfahrzeuge (in den Figuren 5 und 6 nicht gezeigt) geladen werden.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| System | 10 |
| Abtragebereich | 12 |
| Fördereinrichtung | 14 |
| Transportrichtung | 16 |
| Aufnahmeeinrichtung, Rutschenpaar | 18 |
| Aufnahmeeinrichtung der ersten Gruppe | 18a |
| Aufnahmeeinrichtung der zweiten Gruppe | 18b |
| Erster Abschnitt | 20a |
| Zweiter Abschnitt | 20b |
| Inneres des Rundkurses | 22 |
| Zuführeinrichtung, Teleskopbandförderer | 24 |
| Gebäudehülle | 26 |
| fördereinrichtungsfernes Ende der Aufnahmeeinrichtung | 28 |
| fördereinrichtungsnahes Ende der Aufnahmeeinrichtung | 30 |
| Tor | 32 |
| Abtragebereichfreifläche | 34 |
| Scanner | 35 |
| Mitarbeiter | 36 |
| Behälter | 38 |
| Reservebehälter | 38a |
| Ausziehtisch | 40 |
| Verbundseite | 42 |
| Regelseite | 44 |
| Zustellfahrzeug | 46 |

## Patentansprüche

1. System (10) zum Umschlagen und/oder Sortieren von Stückgütern in Abtragebereiche (12) umfassend
eine Fördereinrichtung (14) mit einer in eine Transportrichtung (16) bewegbaren Transportfläche für Stückgüter, und
eine Vielzahl an Aufnahmeeinrichtungen (18) zum Verbringen der Stückgüter von der Transportfläche der Fördereinrichtung (14) in den jeweiligen Abtragebereich (12),
wobei die Fördereinrichtung (14) als horizontaler Rundkurs ausgestaltet ist, und wenigstens zwei einander gegenüberliegende Abschnitte (20a, 20b) aufweist,
wobei eine erste Gruppe Aufnahmeeinrichtungen (18a) von dem ersten der zwei Abschnitte (20a, 20b) in ein Inneres (22) des Rundkurses zeigen,
wobei eine zweite Gruppe Aufnahmeeinrichtungen (18b) von dem zweiten der zwei Abschnitte (20a, 20b) in das Innere (22) des Rundkurses zeigen,
**dadurch gekennzeichnet, dass**
im Inneren (22) des Rundkurses wenigstens eine Aufnahmeeinrichtung der ersten Gruppe (18a) seitlich direkt neben einer Aufnahmeeinrichtung der zweiten Gruppe (18b) angeordnet ist.

2. System (10) nach dem vorhergehenden Anspruch, wobei ein fördereinrichtungsfernes Ende (28) der Aufnahmeeinrichtung (18) tiefer liegt als ein fördereinrichtungsnahes Ende (30) der Aufnahmeeinrichtung (18).

3. System (10) nach einem der vorhergehenden Ansprüche, wobei die Vielzahl an Aufnahmeeinrichtungen (18) derart angeordnet ist, dass sich im Inneren (22) des Rundkurses Aufnahmeeinrichtungen der ersten Gruppe (18a) mit Aufnahmeeinrichtungen der zweiten Gruppe (18b) abwechseln.

4. System (10) nach einem der vorhergehenden Ansprüche, wobei die Aufnahmeeinrichtungen (18) paarweise ausgebildet sind und/oder wobei die Aufnahmeeinrichtungen (18) als Rollenbahnenpaare und/oder Rutschenpaare (18) ausgebildet sind.

5. System (10) nach einem der vorhergehenden Ansprüche, umfassend eine Abtragebereichfreifläche (34) an den Abtragebereichen (12) zum Aufnehmen der Stückgüter von den Aufnahmeeinrichtungen (18), wobei die Abtragebereichfreifläche (34) am Ende jeder jeweiligen Aufnahmeeinrichtung (18), unterhalb der Fördereinrichtung (14) und/oder unterhalb der seitlich benachbarten Aufnahmeeinrichtung (18) angeordnet ist.

6. System (10) nach einem der vorhergehenden Ansprüche, umfassend eine Mehrzahl an Behälter (38), wobei die Behälter (38) auf einer Abtragebereichfreifläche (34) angeordnet sind und/oder einen Ausziehtisch (40), wobei sich der Ausziehtisch (40) der Aufnahmeeinrichtung (18) anschließt und auf der Abtragebereichfreifläche (34) angeordnet ist.

7. System (10) nach dem vorhergehenden Anspruch, wobei eine Konfiguration von Behälter (38) und/oder Ausziehtischen (40) auf nebeneinanderliegenden Abtragebereichfreiflächen (34) gleichartig ist und/oder wobei eine Konfiguration von Behälter (38) und/oder Ausziehtischen (40) auf sich gegenüberliegenden Abtragebereichfreiflächen (34) unterschiedlich ist.

8. System (10) nach einem der vorhergehenden Ansprüche, umfassend eine Gebäudehülle (26) zur Einhausung der Fördereinrichtung (14) und/oder Aufnahmeeinrichtungen (18), wobei die Gebäudehülle (26) eine Vielzahl an Toren (32) und/oder Laderampen umfasst, und wobei pro Abtragebereichfreiflächen (34) wenigstens ein, bevorzugt zwei Tore (32) und/oder Laderampen zugänglich sind.

9. System (10) nach einem der vorhergehenden Ansprüche, wobei der Rundkurs der Fördereinrichtung (14) sich im Wesentlichen rechteckig entlang einer Innenseite einer Gebäudehülle (26) erstreckt.

10. System (10) nach einem der vorhergehenden Ansprüche, umfassend wenigstens eine Zuführeinrichtung (24), insbesondere ein Teleskopbandförderer, zum Zuführen der Stückgüter auf die Fördereinrichtung (14).

11. System (10) nach einem der vorhergehenden Ansprüche, umfassend eine Steuerung, wobei die Steuerung derart ausgestaltet ist, dass das System (10) Verbundbezirksstückgüter mit Aufnahmeeinrichtungen der ersten Gruppe (18a) zu den Abtragebereichen (12) verbringt und dass das System (10) Regelbezirksstückgüter mit Aufnahmeeinrichtungen der zweiten Gruppe (18b) zu den Abtragebereichen (12) verbringt.

12. Verfahren zum Umschlagen und/oder Sortieren von Stückgütern in Abtragebereiche (12) mit einem System (10) umfassend
eine Fördereinrichtung (14) mit einer in eine Transportrichtung (16) bewegbaren Transportfläche für Stückgüter, und
eine Vielzahl an Aufnahmeeinrichtungen (18) zum Verbringen der Stückgüter von der Transportfläche der Fördereinrichtung (14) in den jeweiligen Abtragebereich (12),
wobei die Fördereinrichtung (14) als horizontaler Rundkurs ausgestaltet ist, und wenigstens zwei einander gegenüberliegende Abschnitte (20a, 20b) aufweist,
wobei eine erste Gruppe Aufnahmeeinrichtungen (18a) von dem ersten der zwei Abschnitte (20a, 20b) in ein Inneres (22) des Rundkurses zeigen,
wobei eine zweite Gruppe Aufnahmeeinrichtungen (18b) von dem zweiten der zwei Abschnitte (20a, 20b) in das Innere (22) des Rundkurses zeigen, und
wobei im Inneren (22) des Rundkurses wenigstens eine Aufnahmeeinrichtung der ersten Gruppe (18a) seitlich direkt neben einer Aufnahmeeinrichtung der zweiten Gruppe (18b) angeordnet ist,
mit dem Schritt:
- Sortieren der Stückgüter derart, dass Verbundbezirksstückgüter mit Aufnahmeeinrichtungen der ersten Gruppe (18a) zu den jeweiligen Abtragebereichen (12) verbracht werden und dass Regelbezirksstückgüter mit Aufnahmeeinrichtungen der zweiten Gruppe (18b) zu den jeweiligen Abtragebereichen (12) verbracht werden.

13. Verfahren nach dem vorhergehenden Anspruch, umfassend die Schritte:
- Sortieren der Stückgüter derart, dass Verbundbezirksstückgüter mehrerer Zustellbezirke in einen Abtragebereich (12) verbracht werden,
- Abtragen der Verbundbezirksstückgüter in den Abtragebereichen (12) in eine Mehrzahl an Behälter (38), wobei die Anzahl an Behälter (38) wenigstens der Anzahl an Zustellbezirken entspricht und die Verbundbezirksstückgüter getrennt nach Zustellbezirk in die Behälter (38) sortiert werden,
- Beladen eines Zustellfahrzeugs (46) aus einem vollen Behälter (38) unter Berücksichtigung des Zustellbezirks des Behälters (38).

14. Verfahren nach Anspruch 12, umfassend die Schritte:
- Sortieren der Stückgüter derart, dass Verbundbezirksstückgüter mehrerer Zustellbezirke in einen Abtragebereich (12) verbracht werden,
- Abtragen der Verbundbezirksstückgüter in den Abtragebereichen (12) in eine Mehrzahl an Behälter (38), wobei die Anzahl an Behälter (38) wenigstens der Hälfte der Anzahl an Zustellbezirken entspricht und Verbundbezirksstückgüter zweier Zustellbezirke jeweils in einen Behälter (38) sortiert werden,
- Beladen eines ersten Zustellfahrzeugs (46) aus einem vollen Behälter (38) mit Verbundbezirksstückgüter genau eines Zustellbezirks, und
- Beladen eines weiteren Zustellfahrzeugs mit den im Behälter (38) zurückgebliebenen Verbundbezirksstückgüter des weiteren Zustellbezirks.

15. Verfahren nach einem der vorhergehenden Verfahrensansprüche, umfassend die Schritte:
- Sortieren der Stückgüter derart, dass Regelbezirksstückgüter zweier Zustellbezirke in einen Abtragebereich (12) verbracht werden,
- Abtragen der Regelbezirksstückgüter in den Abtragebereichen (12) durch:
- Beladen eines ersten Zustellfahrzeugs (46), wobei das Zustellfahrzeug (46) mit Regelbezirksstückgütern genau eines Zustellbezirks beladen wird, und Regelbezirksstückgüter des weiteren Zustellbezirks jeweils in einem Behälter (38) zwischengelagert werden,
- Beladen eines weiteren Zustellfahrzeugs mit den im Behälter (38) zwischengelagerten Regelbezirksstückgütern des weiteren Zustellbezirks.

16. Verfahren nach einem der vorhergehenden Verfahrensansprüche, umfassend den Schritt:
- Zuführen der Stückgüter auf die Fördereinrichtung (14) mittels einer Zuführeinrichtung (24), wobei die Stückgüter lose zugeführt werden.

## Claims

1. System (10) for transferring and/or sorting piece goods into removal regions (12) comprising:
a conveying device (14) with a transport surface, movable in a transport direction (16), for piece goods, and
a multiplicity of receiving devices (18) for moving the piece goods from the transport surface of the conveying device (14) into the respective removal region (12),
wherein the conveying device (14) is configured as a horizontal circuit, and has at least two sections (20a, 20b) which lie opposite one another,
wherein a first group of receiving devices (18a) point from the first of the two sections (20a, 20b) into an interior (22) of the circuit,
wherein a second group of receiving devices (18b) point from the second of the two sections (20a, 20b) into the interior (22) of the circuit,
**characterized in that**
at least one receiving device of the first group (18a) is arranged in the interior (22) of the circuit laterally directly next to a receiving device of the second group (18b) .

2. System (10) according to the preceding claim, wherein an end (28) of the receiving device (18) remote from the conveying device lies at a lower level than an end (30) of the receiving device (18) close to the conveying device.

3. System (10) according to either of the preceding claims, wherein the multiplicity of receiving devices (18) are arranged such that receiving devices of the first group (18a) alternate with receiving devices of the second group (18b) in the interior (22) of the circuit.

4. System (10) according to one of the preceding claims, wherein the receiving devices (18) are configured in pairs, and/or wherein the receiving devices (18) are configured as roller track pairs and/or chute pairs (18).

5. System (10) according to one of the preceding claims, comprising an removal region open surface (34) on the removal regions (12) for receiving the piece goods from the receiving devices (14), wherein the removal region open surface (34) is arranged at the end of each respective receiving device (18), below the conveyor device (18) and/or below the laterally adjacent receiving device (18).

6. System (10) according to one of the preceding claims, comprising a plurality of containers (38), wherein the containers (38) are arranged on a removal region open surface (34) and/or a pull-out table (40), wherein the pull-out table (40) adjoins the receiving device (18) and is arranged on the removal region open surface (34).

7. System (10) according to the preceding claim, wherein a configuration of containers (38) and/or pull-out tables (40) is identical on removal region open surfaces (34) which lie next to one another, and/or wherein a configuration of containers (38) and/or pull-out tables (40) is different on removal region open surfaces (34) which lie opposite one another.

8. System (10) according to one of the preceding claims, comprising a building envelope (26) for enclosing the conveying device (14) and/or receiving devices (18), wherein the building envelope (26) comprises a plurality of gates (32) and/or loading ramps, and wherein at least one, preferably two gates (32) and/or loading ramps are accessible per removal region open surface (34).

9. System (10) according to one of the preceding claims, wherein the circuit of the conveying device (14) extends substantially rectangularly along an inner side of a building envelope (26).

10. System (10) according to one of the preceding claims, comprising at least one feed device (24), in particular a telescopic belt conveyor, for feeding the piece goods onto the conveyor device (14).

11. System (10) according to one of the preceding claims, comprising a controller, wherein the controller is configured in such a way that the system (10) moves combination district piece goods by way of receiving devices of the first group (18a) to the removal regions (12), and that the system (10) moves standard district piece goods by way of receiving devices of the second group (18b) to the removal regions (12).

12. Method for transferring and/or sorting piece goods into removal regions (12) by way of a system (10) comprising:
a conveying device (14) with a transport surface, movable in a transport direction (16), for piece goods, and
a multiplicity of receiving devices (18) for moving the piece goods from the transport surface of the conveying device (14) into the respective removal region (12),
wherein the conveying device (14) is configured as a horizontal circuit, and has at least two sections (20a, 20b) which lie opposite one another,
wherein a first group of receiving devices (18a) point from the first of the two sections (20a, 20b) into an interior (22) of the circuit,
wherein second group of receiving devices (18b) point from the second of the two sections (20a, 20b) into the interior (22) of the circuit, and
wherein at least one receiving device of the first group (18a) is arranged in the interior (22) of the circuit laterally directly next to a receiving device of the second group (18b),
with the step:
- sorting the piece goods in such a way that combination district piece goods are moved by way of receiving devices of the first group (18a) to the respective removal regions (12), and that standard district piece goods are moved by way of receiving devices of the second group (18b) to the respective removal regions (12).

13. Method according to the preceding claim, comprising the steps:
- sorting the piece goods in such a way that combination district piece goods of a plurality of delivery districts are moved into one removal region (12),
- removing the combination district piece goods in the removal regions (12) into a plurality of containers (38), wherein the number of containers (38) at least corresponds to the number of delivery districts, and the combination district piece goods are sorted into the containers (38) in a manner which is separated according to delivery district,
- loading a delivery vehicle (46) from a full container (38) with consideration of the delivery district of the container (38).

14. Method according to Claim 12, comprising the steps:
- sorting the piece goods in such a way that combination district piece goods of a plurality of delivery districts are moved into one removal region (12),
- removing the combination district piece goods in the removal areas (12) into a plurality of containers (38), wherein the number of containers (38) corresponds to at least half the number of delivery districts, and combination district piece goods of two delivery districts are sorted in each case into one container (38),
- loading a first delivery vehicle (46) from a full container (38) with combination district piece goods of precisely one delivery district, and
- loading a further delivery vehicle with the combination district piece goods of the further delivery district which remain in the container (38).

15. Method according to one of the preceding method claims, comprising the steps:
- sorting the piece goods in such a way that standard district piece goods of two delivery districts are moved into one removal region (12),
- removing the standard district piece goods in the removal regions (12) by:
- loading a first delivery vehicle (46), wherein the delivery vehicle (46) is loaded with standard district piece goods of precisely one delivery district, and standard district piece goods of the further delivery district are temporarily stored in each case in one container (38),
- loading a further delivery vehicle with the standard district piece goods of the further delivery district which are temporarily stored in the container (38).

16. Method according to one of the preceding method claims, comprising the step:
- feeding the piece goods onto the conveying device (14) by means of a feed device (24), wherein the piece goods are fed loosely.

## Revendications

1. Système (10) pour transborder et/ou trier des marchandises diverses dans des zones d'enlèvement (12), comprenant
un dispositif de transport (14), comprenant une surface de transport pour des marchandises diverses, mobile dans une direction de transport (16), et
une pluralité de dispositifs de réception (18), pour transférer les marchandises diverses de la surface de transport du dispositif de transport (14) dans la zone d'enlèvement (12) respective,
le dispositif de transport (14) étant conçu sous la forme d'une piste circulaire horizontale et présentant au moins deux sections (20a, 20b) opposées l'une à l'autre,
un premier groupe de dispositifs de réception (18a) s'étendant depuis la première des deux sections (20a, 20b) vers un intérieur (22) de la piste circulaire,
un deuxième groupe de dispositifs de réception (18b) s'étendant depuis la deuxième des deux sections (20a, 20b) vers l'intérieur (22) de la piste circulaire, **caractérisé en ce qu'**
à l'intérieur (22) de la piste circulaire, au moins un dispositif de réception du premier groupe (18a) est agencé latéralement directement à côté d'un dispositif de réception du deuxième groupe (18b).

2. Système (10) selon la revendication précédente, dans lequel une extrémité (28) du dispositif de réception (18) éloignée du dispositif de transport est située plus bas qu'une extrémité (30) du dispositif de réception (18) proche du dispositif de transport.

3. Système (10) selon l'une des revendications précédentes, dans lequel la pluralité de dispositifs de réception (18) est agencée de telle sorte qu'à l'intérieur (22) de la piste circulaire, des dispositifs de réception du premier groupe (18a) sont alternés avec des dispositifs de réception du deuxième groupe (18b).

4. Système (10) selon l'une des revendications précédentes, dans lequel les dispositifs de réception (18) sont réalisés par paires et/ou dans lequel les dispositifs de réception (18) sont réalisés sous forme de paires de convoyeurs à rouleaux et/ou de paires de glissières (18).

5. Système (10) selon l'une des revendications précédentes, comprenant une surface libre (34) de zone d'enlèvement au niveau des zones d'enlèvement (12) pour recevoir les marchandises diverses provenant des dispositifs de réception (18), la surface libre (34) de zone d'enlèvement étant agencée à l'extrémité de chaque dispositif de réception (18) respectif, en dessous du dispositif de transport (14) et/ou en dessous du dispositif de réception (18) latéralement adjacent.

6. Système (10) selon l'une des revendications précédentes, comprenant une pluralité de conteneurs (38), les conteneurs (38) étant agencés sur une surface libre (34) de zone d'enlèvement et/ou sur une table extractible (40), la table extractible (40) étant reliée au dispositif de réception (18) et agencée sur la surface libre (34) de zone d'enlèvement.

7. Système (10) selon la revendication précédente, dans lequel une configuration de conteneurs (38) et/ou de tables extractibles (40) sur des surfaces libres juxtaposées (34) de zones d'enlèvement est identique et/ou dans lequel une configuration de conteneurs (38) et/ou de tables extractibles (40) est différente sur des surfaces libres opposées (34) de zones d'enlèvement.

8. Système (10) selon l'une des revendications précédentes, comprenant une enveloppe de bâtiment (26) pour enfermer le dispositif de transport (14) et/ou des dispositifs de réception (18), l'enveloppe de bâtiment (26) comprenant une pluralité de portes (32) et/ou de rampes de chargement, et dans lequel, par surface libre (34) de zone d'enlèvement, au moins une, de préférence deux portes (32) et/ou rampes de chargement sont accessibles.

9. Système (10) selon l'une des revendications précédentes, dans lequel la piste circulaire du dispositif de transport (14) s'étend essentiellement de manière rectangulaire le long d'un côté intérieur d'une enveloppe de bâtiment (26).

10. Système (10) selon l'une des revendications précédentes, comprenant au moins un dispositif d'alimentation (24), en particulier un convoyeur à bande télescopique, pour amener les marchandises diverses sur le dispositif de transport (14).

11. Système (10) selon l'une des revendications précédentes, comprenant une unité de commande, l'unité de commande étant conçue de telle sorte que le système (10) achemine des marchandises diverses de secteur de groupement comprenant des dispositifs de réception du premier groupe (18a) vers les zones d'enlèvement (12) et que le système (10) achemine des marchandises diverses de secteur de régulation vers les zones d'enlèvement (12) au moyen de dispositifs de réception du deuxième groupe (18b).

12. Procédé pour transborder et/ou trier des marchandises diverses dans des zones d'enlèvement (12) au moyen d'un système (10) comprenant
un dispositif de transport (14), comprenant une surface de transport pour des marchandises diverses, mobile dans une direction de transport (16), et
une pluralité de dispositifs de réception (18), pour transférer les marchandises diverses de la surface de transport du dispositif de transport (14) dans la zone d'enlèvement (12) respective,
le dispositif de transport (14) étant conçu sous la forme d'une piste circulaire horizontale et présentant au moins deux sections (20a, 20b) opposées l'une à l'autre,
un premier groupe de dispositifs de réception (18a) s'étendant depuis la première des deux sections (20a, 20b) vers un intérieur (22) de la piste circulaire,
un deuxième groupe de dispositifs de réception (18b) s'étendant depuis la deuxième des deux sections (20a, 20b) vers l'intérieur (22) de la piste circulaire, et
dans lequel, à l'intérieur (22) de la piste circulaire, au moins un dispositif de réception du premier groupe (18a) est agencé latéralement directement à côté d'un dispositif de réception du deuxième groupe (18b), comprenant l'étape :
- trier les marchandises diverses de telle sorte que des marchandises diverses de secteur de groupement comprenant des dispositifs de réception du premier groupe (18a) sont acheminées vers les zones d'enlèvement (12) respectives et que des marchandises diverses de secteur de régulation comprenant des dispositifs de réception du deuxième groupe (18b) sont acheminées vers les zones d'enlèvement (12) respectives.

13. Procédé selon la revendication précédente, comprenant les étapes suivantes :
- trier les marchandises diverses de telle sorte que des marchandises diverses de secteur de groupement de plusieurs secteurs de livraison sont acheminées vers une zone d'enlèvement (12),
- transférer les marchandises diverses de secteur de groupement dans les zones d'enlèvement (12) dans une pluralité de conteneurs (38), le nombre de conteneurs (38) correspondant au moins au nombre de secteurs de livraison et les marchandises diverses de secteur de groupement étant triées séparément dans les conteneurs (38) en fonction du secteur de livraison,
- charger un véhicule de livraison (46) à partir d'un conteneur plein (38) en tenant compte du secteur de livraison du conteneur (38).

14. Procédé selon la revendication 12, comprenant les étapes suivantes :
- trier les marchandises diverses de telle sorte que des marchandises diverses de secteur de groupement de plusieurs secteurs de livraison sont acheminées vers une zone d'enlèvement (12),
- transférer les marchandises de secteur de groupement dans les zones d'enlèvement (12) dans une pluralité de conteneurs (38), le nombre de conteneurs (38) correspondant au moins à la moitié du nombre de secteurs de livraison et les marchandises diverses de secteur de groupement de deux secteurs de livraison étant triées respectivement dans un conteneur (38),
- charger un premier véhicule de livraison (46) à partir d'un conteneur plein (38) avec des marchandises diverses de secteur de groupement d'un secteur de livraison précis, et
- charger un autre véhicule de livraison avec les marchandises diverses de secteur de groupement restées dans le conteneur (38) de l'autre secteur de livraison.

15. Procédé selon l'une des revendications précédentes, comprenant les étapes suivantes :
- trier les marchandises diverses de telle sorte que des marchandises diverses de secteur de régulation de deux secteurs de livraison sont acheminées vers une zone d'enlèvement (12),
- retirer les marchandises diverses de secteur de régulation dans les zones d'enlèvement (12) par :
- le chargement d'un premier véhicule de livraison (46), le véhicule de livraison (46) étant chargé avec des marchandises diverses de secteur de régulation d'un seul secteur de livraison, et des marchandises diverses de secteur de régulation de l'autre secteur de livraison étant entreposées dans un conteneur (38),
- le chargement d'un autre véhicule de livraison avec les marchandises diverses de secteur de régulation entreposées dans le conteneur (38) de l'autre secteur de livraison.

16. Procédé selon l'une des revendications précédentes, comprenant l'étape suivante :
- acheminer les marchandises diverses vers le dispositif de transport (14) au moyen d'un dispositif d'acheminement (24), les marchandises diverses étant acheminées en vrac.
